# EUROPÄISCHE PATENTANMELDUNG

(11) **EP 1 235 200 A2**
(43) Veröffentlichungstag der Anmeldung: **28.08.2002**
(21) Anmeldenummer: 02100176.3
(22) Anmeldetag: 22.02.2002
(51) Int. Cl.: G09G 3/36

(54) **Anordnung zur Ansteuerung von Anzeigeeinheiten mit adaptiver Startsequenz**

(30) Priorität: 23.02.2001 DE 10108980
(71) Anmelder: Koninklijke Philips Electronics N.V., 5621 BA Eindhoven (NL)
(72) Erfinder: Hohenwarter, Harald, 52066, Aachen (DE); Rzittka, Eckart, 52066, Aachen (DE)
(74) Vertreter: Volmer, Georg, Dipl.-Ing.

(57) **Zusammenfassung**

Die Erfindung betrifft eine Schaltungsanordnung mit einer Teilspannungserzeugungseinheit und einem Spannungsvervielfacher zur Erzeugung wenigstens einer Spannung Vmult, bei der zur Steuerung des Spannungsvervielfacher vorgesehen ist, den Spannungsvervielfacher in einer Startzeit in einen Direktmode zu schalten. Desweiteren betrifft die Erfindung einen Spannungsvervielfacher und eine Anordnung zur Ansteuerung einer Anzeigeeinrichtung und eine Anzeigeeinrichtung mit einer derartigen Anordnung und ein elektronisches Gerät mit einer Anzeigeeinheit zur Darstellung von Bilddaten mit einer Anordnung zur Ansteuerung dieser Anzeigeeinheit und ein Verfahren zum Starten einer Schaltungsanordnung 15 mit einer Teilspannungserzeugereinheit 40, einem Spannungsvervielfacher 20 und einer Startsteuereinheit 30. Um ein sicheres und schnelles Starten einer derartigen Schaltungsanordnung 15 zu ermöglichen, bei gleichzeitigem effizientem Stromverbrauch und Platzbedarf wird vorgeschlagen, das während einer adaptiven Startzeit ts, der Spannungsvervielfacher 20 mittels eines Anfangsstartsignals 36 in einen Direktmode geschaltet wird, wobei hierbei ein in der Startsteuereinheit 30 erzeugtes Aktivierungssignal 32 in seinem Verlauf überwacht wird und in Abhängigkeit dawn die Steuerung des Spannungsvervielfachers 20 vorgenommen wird.

## Beschreibung

Die Erfindung betrifft eine Schaltungsanordnung mit einer Teilspannungserzeugungseinheit und einem Spannungsvervielfacher zur Erzeugung mindestens einer Spannung. Desweiteren betrifft die Erfindung einen Spannungsvervielfacher und eine Anordnung zur Ansteuerung einer Anzeigeeinrichtung und eine Anzeigeeinrichtung mit einer derartigen Anordnung und ein elektronisches Gerät mit einer Anzeigeeinheit zur Darstellung von Bilddaten mit einer Anordnung zur Ansteuerung dieser Anzeigeeinheit.

Spannungsvervielfacher werden in Geräten benötigt, in denen eine höhere Spannung erforderlich ist, als die zur Verfügung stehende Versorgungsspannung. Insbesondere werden diese Spannungsvervielfacher für Treiberschaltungen für Anzeigevorrichtungen verwendet. Um moderne Flüssigkristallanzeigen anzusteuern, ist es notwendig, Spannungen bereitzustellen, die die Versorgungsspannung des Treiberschaltkreises um ein Vielfaches übersteigen. Spannungsvervielfacherschaltungen werden üblicherweise als Ladungspumpen ausgeführt, die mit der zur Verfügung stehenden Systemversorgungsspannung betrieben werden, wobei die Systemversorgungsspannung durch die Serienschaltung von Pumpstufen, die prinzipiell jeweils aus einem Schalter oder einer Diode und einem Kondensator bestehen, auf die erforderliche Ausgangsspannung hochgepumpt wird.

Der Displaytechnik kommt in den nächsten Jahren eine immer wichtigere Rolle in der Informations- und Kommunikationstechnik zu. Als Schnittstelle zwischen Mensch und digitaler Welt besitzt die Anzeigevorrichtung eine zentrale Bedeutung für die Akzeptanz moderner Informationssysteme. Insbesondere transportable Geräte wie bspw. Notebooks, Telefone, Digitalkameras und Personal Digital Assistants sind ohne den Einsatz von Displays nicht realisierbar. Für die Ansteuerung derartiger Anzeigevorrichtungen oder Displays werden Treiberschaltungen oder Anordnungen zur Ansteuerung dieser Anzeigevorrichtungen verwendet. Diese Treiberschaltungen wandeln die Bildsignale die auf einem Display dargestellt werden sollen. Die Bildinformationen sind in Speichermedien als digitale Signale gespeichert. Diese digitalen Signale müssen in analoge Signale umgewandelt werden, so dass mittels einer analogen Spannung ein entsprechender Kontrast auf der Anzeige erzielt werden kann.

Anzeigeeinheiten werden heutzutage in großen Stückzahlen produziert, bei denen eine hohe Stromeffizienz eine Hauptanforderung ist.

Die oben genannten Anzeigeeinrichtungen werden hauptsächlich in batteriebetriebenen Geräten verwendet, so dass ein niedriger Stromverbrauch und eine entsprechende Stromeffizienz immer wichtiger werden. Desweiteren spielt der Platzbedarf, der in derartigen Geräten zur Verfügung steht, eine entscheidende Rolle, so dass jede Platzeinsparung und Gewichtsreduzierung einen entscheidenden Vorteil bewirkt. Nicht oder nur kurzzeitig benötigte Bauelemente oder Komponenten sind zusätzliche Stromverbraucher, die auch während ihrer nicht aktiven Zeit einen entsprechenden Stromverbrauch aufzeigen.

In der DE 19639701 wird eine Regelschaltung für Spannungsvervielfacher angegeben bei der die Ausgangsspannung überwacht wird. Ein von der Ausgangsspannung abhängiges Steuersignal wird über einen Komparator den Treibern einer Ladungspumpe zugeführt. Damit wird ein Ein/oder Ausschalten der Ladungspumpe in Abhängigkeit der Ausgangsspannung ermöglicht. Durch nichtdefinierte Zustände beim Start dieser Schaltung kann es zu einer Fehlfunktion der Schaltung kommen. Die unsicheren Zustände gehen auf nicht definierte Spannungen im Anfangszustand der Ladungspumpe und deren Regelkreis zurück. Dabei kann zum Beispiel die Teilspannungserzeugung undefiniert sein und die Teilspannung, die mit einer von außen zugeführten Referenzspannung verglichen wird, größer als die Referenzspannung sein, wodurch die Ladungspumpe nicht gestartet wird, so dass die Ausgangsspannung der Ladungspumpe nicht steigen kann, was letztendlich zu einer Fehlfunktion der Gesamtanordnung führen würde.

Beim Start der Ladungspumpe beträgt der Spannungswert am Ausgang der Ladungspumpe null Volt oder ist undefiniert, so dass die einzelnen Teilspannungswerte auch undefiniert sind und die Ladungspumpe auf Grund des Vergleichs im Komparator möglicherweise das Signal bekommt, dass keine Spannungsvervielfachung notwendig ist.

Eine zusätzliche Anforderung an derartige Schaltungen entsteht durch unterschiedliche Lasten, mit der die Schaltung beaufschlagt werden kann.

Aufgabe der Erfindung ist es deshalb, eine Schaltungsanordnung anzugeben, die eine automatische und sichere Startsequenz bei einem niedrigen Stromverbrauch aufweist und wenig Platz auf einem Schaltkreis beansprucht.

Diese Aufgabe wird mit einer Schaltungsanordnung zur Erzeugung wenigstens eines Spannungswertes gelöst, die eine Teilspannungserzeugsreinheit und einen Spannungsvervielfacher enthält, bei der zur Steuerung des Spannungsvervielfachers in einer Startzeit (ts) vorgesehen ist, den Spannungsvervielfacher in einen Direktmode zu schalten.

Die erfindungsgemäße Anordnung ist zur Bereitstellung einer erhöhten Spannung Vmult und davon abhängigen mehreren unterschiedlichen Teilspannungswerten erforderlich. Diese Spannungswerte werden beispielsweise zur Ansteuerung eines Displays benötigt und müssen eine hohe Genauigkeit in dem entsprechenden Spannungswert aufweisen. Da einige Teilspannungswerte zur Ansteuerung eines Displays häufig über den zur Verfügung stehenden Versorgungsspannungswerten liegen, wird ein Spannungsvervielfacher eingesetzt. Dieser Spannungsvervielfacher ist in seinem Multiplikationsfaktor programmierbar, bspw. indem nicht alle vorhandenen Stufen des Spannungsvervielfachers aktiviert werden. Durch die Programmierbarkeit des Spannungsvervielfachers werden immer nur so viele Stufen des Spannungsvervielfachers betrieben, wie für die jeweilige Anwendung notwendig sind. Damit ist der Spannungsvervielfacher bezüglich des Stromverbrauchs jeweils an die Anwendung adaptierbar. Mit welchem Multiplikationsfaktor der Spannungsvervielfacher betrieben wird, hängt von den erforderlichen Teilspannungswerten ab, die durch die Versorgungsspannung, Display-Eigenschaften und darzustellenden Bildinformationen bestimmt werden.

Displays können in unterschiedlichen Betriebsmodi betrieben werden, die sich bspw. in der Auflösung unterscheiden. Für niedrige Auflösungen sind niedrigere Teilspannungswerte erforderlich, als wenn das Display mit seiner maximalen Auflösung betrieben wird.

Auch hierfür ist eine Programmierbarkeit des Multiplikationsfaktors des Spannungsvervielfachers vorteilhaft.

Um ein sicheres und schnelles Einschalten der Anordnung zu ermöglichen, ist es notwendig, die Anordnung während einer Startzeit anders zu betreiben als während des normalen Betriebes. Es wird deshalb vorgeschlagen, den Spannungsvervielfacher für die Startzeit direkt zu starten. Dazu ist es vorgesehen, dem Spannungsvervielfacher ein Aktivierungssignal und ein Anfangsstartsignal zuzuführen. Das Anfangsstartsignal wird in einer Startzeit dem Spannungsvervielfacher zugeführt und schaltet diesen in einen Direktmode. Dabei wird die Versorgungsspannung Vdd direkt auf den Ausgang des Spannungsvervielfachers durchgeschaltet, so dass sich eine definierte Ausgangsspannung des Spannungsvervielfachers und definierte Teilspannungswerte in der Teilspannungserzeugungseinheit einstellen können. Nach einer Startzeit und der Einstellung aller erforderlichen Spannungen und Teilspannungen erfolgt die Steuerung des Spannungsvervielfachers mittels des Aktivierungssignals.

In einer vorteilhaften Ausgestaltung der Erfindung wird das Aktivierungssignal aus einer Teilspannung und einem Referenzsignal gebildet. Die Teilspannung wird dabei in der Teilspannungserzeugungseinheit erzeugt, das Referenzsignal wird von außen zugeführt.

Das Anfangstartsignal wird durch Überwachen des Aktivierungssignals erzeugt. Dabei wird dem Spannungsvervielfacher das Anfangsstartsignal solange zugeführt, bis das Aktivierungssignal einen sicheren logischen Zustand aufweist.

Das Anfangstartsignal und das Aktivierungssignal werden in einer Startsteuereinheit erzeugt. Diese ist für die Steuerung des Spannungsvervielfachers in der Startzeit und in dem normalen oder regulären Betrieb erforderlich. Nachdem sich am Ausgang des Spannungsvervielfachers, der im Direktmode betrieben wird, eine definierte Ausgangsspannung eingestellt hat, stellen sich auch definierte Teilspannungswerte ein, so dass die Startsteuereinheit ein definiertes Aktivierungssignal erzeugt und der Spannungsvervielfacher in seinen regulären Betrieb wechseln kann.

Nachdem das Aktivierungssignal einen derartigen sicheren logischen Zustand eingenommen hat, wird der Spannungsvervielfacher vom Aktivierungssignal gesteuert. Das Aktivierungssignal steuert dabei, ob der Spannungsvervielfacher zur Multiplikation von Spannungen erforderlich ist oder nicht.

Die erfindungsgemäße Schaltungsanordnung enthält einen Spannungsvervielfacher und eine Teilspannungserzeugungseinheit, wobei die von der Teilspannungserzeugungseinheit erzeugten Teilspannungswerte von der vom Spannungsvervielfacher erzeugten Spannung Vmult abgeleitet werden. Um den Spannungsvervielfacher ein- bzw. auszuschalten oder in seinem Multiplikationsfaktor zu beeinflussen, wird ein festlegbarer Teilspannungswert von der Teilspannungserzeugungseinheit abgeleitet und einer Startsteuereinheit zugeführt. Der festlegbare Teilspannungswert wird mittels einer zur Teilspannungserzeugungseinheit gehörenden Schalteinheit zur Startsteuereinheit durchgeschaltet. Dabei ist die Schalteinheit vorzugsweise als Transistorarray realisiert, so dass je nach Anwendung jede verfügbare Teilspannung der Startsteuereinheit zugeführt werden kann.

Die Startsteuereinheit weist vorteilhafterweise zumindest einen Vergleicher auf, der bspw. durch einen Differenzverstärker realisiert ist. Diesem Vergleicher wird ein Teilspannungswert aus der Teilspannungserzeugungseinheit zugeführt. Als Vergleichssignal wird eine von außen angelegte Referenzspannung Vref an den Vergleicher angelegt. Der Vergleich dieser beiden Werte führt zu einem Aktivierungssignal. Mittels des Aktivierungssignals und des Anfangszustandes der Anordnung wird in der Startsteuereinheit ein Anfangssteuersignal erzeugt, welches dem Spannungsvervielfacher zugeführt wird. Dazu wird das Aktivierungssignal einer Logikschaltung zugeführt, die eine selbsteinstellende Startsequenz erzeugt, die in Form des Anfangsstartsignals dem Spannungsvervielfacher zugeführt wird. Um sicherzustellen, das die Zeit, in der der Spannungsvervielfacher im Direktmode betrieben wird, so kurz wie möglich ist, ist es erforderlich das Aktivierungssignal vom Vergleicher zu beobachten. Diese Zustandüberwachung des Aktivierungssignals ermöglicht es, die Zeit für die Anfangstartsequenz so kurz wie möglich zu halten.
Dadurch lässt sich die Anordnung zur Ansteuerung von Anzeigeeinheiten an viele unterschiedliche Anwendungen anpassen. Gleichzeitig wird durch diese Zustandsüberwachung ein sicherer und schneller Start der Anordnung ermöglicht, wobei außerdem aufwendige zusätzliche Schaltungskomponenten zur Sicherstellung eines sicheren Starts nicht benötigt werden.

Das Referenzsignal, das dem Vergleicher zugeführt wird, kann bspw. eine Temperaturfunktion beschreiben. Da Anzeigeeinheiten unter anderem temperaturabhängig sein können, kann es bei niedrigeren Temperaturen notwendig sein, die Spannungswerte an diese Temperatur anzupassen.

In einer vorteilhaften Ausgestaltung der Erfindung ist die Startzeit, in der der Spannungsvervielfacher in dem Direktmode betrieben wird, adaptiv einstellbar. Dadurch wird gewährleistet, das die Zeit, in der der Spannungsvervielfacher im Direktmode betrieben wird, immer so kurz wie möglich ist. Um diese Adaption der Startzeit zu ermöglichen, sind folgende Erfordernisse einzuhalten oder zu realisieren. Der Spannungsvervielfacher ist im Direktmode zu betreiben, d.h. die zur Verfügung stehende Versorgungsspannung Vdd wird direkt zum Ausgang des Spannungsvervielfachers durchgeschaltet, ohne das die Stufen der Ladungspumpe aktiviert werden. Weiterhin muss die Teilspannungserzeugungseinheit an die vom Spannungsvervielfacher bereitgestellte Ausgangsspannung Vmult angeschlossen sein, d.h. der Teilspannungserzeugungseinheit wird in der Startzeit die Versorgungsspannung Vdd zugeführt. Die Referenzspannung Vref wird dem Vergleicher zugeführt, jedoch sollte hier die Referenzspannung Vref mit dem niedrigsten Temperaturkoeffizient gewählt werden, um in dieser Zeit so temperaturunabhängig wie möglich zu sein. Außerdem sollten die Steuerspannungen Vop für die Schalteinheit zur Erzeugung des Teilspannungswertes zur Zuführung zum Vergleicher auf die maximal mögliche Spannung geschaltet werden. In diesem Fall steht als maximal mögliche Spannung die Versorgungsspannung Vdd zur Verfügung

Die Steuerspannungen Vop zur Steuerung der Schalteinheit werden von der Ausgangsspannung des Spannungsvervielfachers abgeleitet und können Spannungswerte zwischen Masse oder Vss und Vmult einnehmen. Die Teilspannung, die dem Vergleicher zugeführt wird, hängt dabei von den verfügbaren Teilspannungswerten des Spannungsteilers ab - die höchste Spannung kann in der Startzeit höchstens Vdd sein.

Vorteilhaft für einen schnellen Start der Anordnung ist eine niedrige Last am Ausgang der Ladungspumpe, wodurch Kapazitäten der Anordnung so schnell wie möglich geladen werden können. Falls also die Höhe der Last einstellbar ist, sollte diese so niedrig wie möglich sein Dies wird bspw. dadurch erreicht, dass alle an die Schaltungsanordnung angeschlossenen Treiberschaltungen bspw. zur Ansteuerung einer Anzeigeeinheit, abgeschaltet werden.

In einer vorteilhaften Ausgestaltung der Erfindung ist es vorgesehen, die Ladungspumpe in den Direktmode zu schalten. Dabei wird die Versorgungsspannung Vdd direkt auf den Ausgang des Spannungsvervielfachers oder der Ladungspumpe durchgeschaltet. Eine Ladungspumpe besteht aus einer Serienschaltung mehrerer Pumpstufen, wobei jede Pumpstufe wenigstens einen Schalter oder eine Diode und ein Ladungsspeicherelement aufweist. Die Schalter werden nach einem periodischen Signal geöffnet und geschlossen. Dazu korrespondierend werden die Ladunsgspeicherelemente mittels Treiberschaltungen aufgeladen. Die so in jeder Stufe vorhandene Ladung wird somit von Stufe zu Stufe weitergereicht. Die Ladungsspeicherelemente stellen im Direktmode eine kapazitive Last dar, die erst aufgeladen werden muss, bevor am Ausgang des Spannungsvervielfachers die Versorgungsspannung anliegt. Demzufolge wird vorgeschlagen, diese Kapazitäten im Direktmode derart abzuschalten, dass ein Aufladen nicht mehr erforderlich ist und damit die Startzeit verkürzt werden kann. Alternativ dazu kann die Ladungspumpe eine Verbindung aufweisen, die im Direktmode die Stufen der Ladungspumpe überbrückt und somit eine direkte Verbindung vom Eingang des Spannungsvervielfachers zu dessen Ausgang realisiert.

Durch die Reduzierung der notwendigen Komponenten zur Realisierung eines sicheren Starts des Spannungsvervielfachers ist ein durchzuführender Test bei der Herstellung eines derartigen Schaltkreises unaufwendiger, da beispielsweise nur ein Komparator getestet werden muss.

Eine derartige Anordnung kann dadurch weiter entwickelt werden, dass ein weiterer Komparator eingeführt wird, der einen anderen Teilspannungswert mit einer Referenzspannung vergleicht, so dass die beiden Teilspannungswerte, die den beiden Komparatoren zugeführt werden, in jedem Fall eine unterschiedliche Spannung aufweisen, so dass im Einschaltzustand die Ladungspumpe sicher gestartet werden kann.

Die Aufgabe wird auch durch einen Spannungsvervielfacher zur Erzeugung wenigstens eines Spannungswertes mit einer Serienschaltung von Stufen mit Schalteinrichtungen, Schalteinrichtungen und Kapazitäten gelöst, bei dem während einer Startzeit die Schalteinrichtungen geschlossen sind und dadurch am Eingang des Spannungsvervielfachers anliegende Versorgungsspannung auf den Ausgang des Spannungsvervielfachers durchgeschaltet ist und mittels der Schalteinrichtungen die Kapazitäten abschaltbar sind. Durch diesen auch als Direktmode bezeichneten Startvorgang wird ein schnelleres Erreichen eines Spannungswertes erreicht. Der Direktmode kann sowohl bei Spannungsvervielfachern mit festeingestellter Vervielfachung, als auch bei Spannungsvervielfachern mit programmierbarer Vervielfachung eingesetzt werden.

Vorteilhafterweise kann nach Ablauf der Startzeit der Multiplikationsfaktor des Spannungsvervielfachers stufenweise bis zum Erreichen eines vorherbestimmten Multiplikationsfaktors inkrementiert werden.

Die Aufgabe wird auch durch eine Schaltungsanordnung zur Ansteuerung einer Anzeigevorrichtung mit einer Teilspannungserzeugereinheit und einem Spannungsvervielfacher gelöst, bei der zur Steuerung des Spannungsvervielfachers vorgesehen ist, den Spannungsvervielfacher mittels eines Anfangsstartsignals in einer Startzeit (ts) in einen Direktmode zu schalten.

In einer weiteren vorzugsweisen Ausführung der Erfindung wird die Teilspannungserzeugungseinheit gleichzeitig zur Bereitstellung unterschiedlicher Teilspannungswerte zur Ansteuerung der Zeilen eines Displays und zur Bereitstellung eines Teilspannungswertes zur Steuerung des Spannungsvervielfachers genutzt. Daraus ergibt sich eine besonders platzeffiziente und energieeffiziente Realisierung einer Anordnung zur Ansteuerung von Anzeigeeinheiten.

Die Aufgabe wird auch durch eine Anzeigeeinheit zur Darstellung von Bilddaten mit einer Anordnung zur Ansteuerung der Anzeigeeinheit mit einer Teilspannungserzeugereinheit und einem Spannungsvervielfacher gelöst, bei der vorgesehen ist, den Spannungsvervielfacher in einer Startzeit mittels wenigstens eines Signals in einen Direktmode zu schalten.

Die Aufgabe wird auch durch ein elektronisches Gerät mit einer Anzeigeeinheit zur Darstellung von Bilddaten und mit einer Anordnung zur Ansteuerung der Anzeigeeinheit mit einer Teilspannungserzeugereinheit und einem Spannungsvervielfacher gelöst, bei der wenigstens ein Signal zur Steuerung des Spannungsvervielfachers vorgesehen ist und der Spannungsvervielfacher in einer Startzeit (ts) in einen Direktmode schaltbar ist.

Die Aufgabe wird auch durch ein Verfahren zum Starten einer Schaltungsanordnung mit einer Teilspannungserzeugereinheit und einem Spannungsvervielfacher gelöst, bei dem mittels eines Vergleichs eines Teilspannungswertes und einer Referenzspannung ein Aktivierungssignal erzeugt wird und bei dem der Spannungsvervielfacher während einer Startzeit (ts) in einen Direktmode geschaltet wird und die Startzeit (ts) durch Überwachen eines Aktivierungssignals adaptiv eingestellt wird.

Im Folgenden wird die Erfindung mit Hilfe der Figuren beispielhaft erläutert. Es zeigen:
- Fig.1: Anordnung zur Ansteuerung einer Anzeigeeinheit ohne zusätzlichen Startkomparator
- Fig.2: Startsequenz
- Fig.3: Anzeigeeinheit
- Fig.4: Anordnung zur Ansteuerung einer Anzeigeeinheit mit einem Startkomparator
- Fig 5: Anordnung eines Spannungsvervielfachers mit Vorrichtungen für den Direktmode

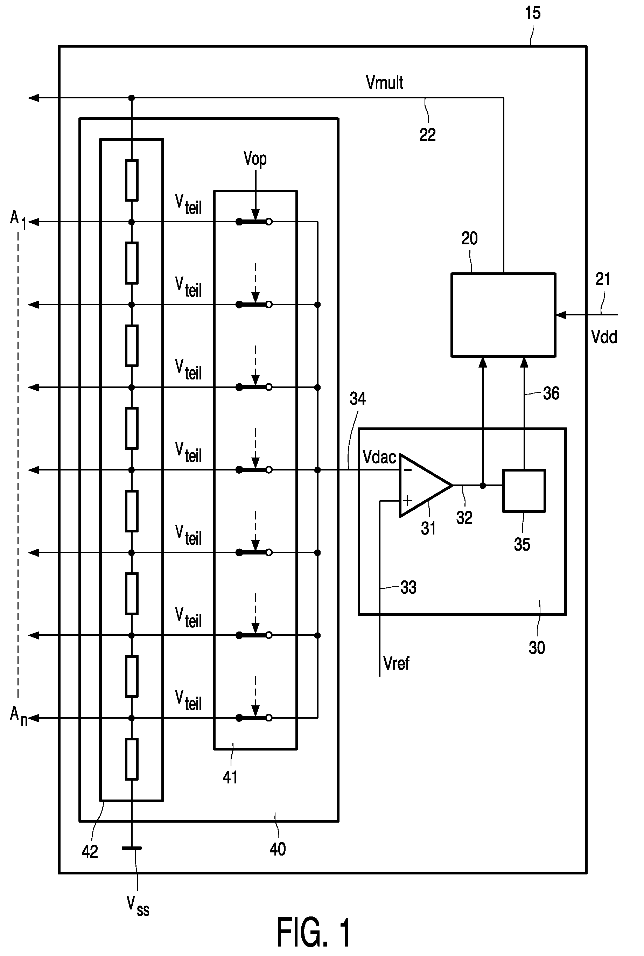

Fig. 1 zeigt eine Anordnung 15 zur Ansteuerung einer Anzeigeneinheit ohne Startkomparator. Eine Anordnung 15 zur Ansteuerung der Anzeigeneinheit enthält einen Spannungsvervielfacher 20, eine Teilspannungserzeugungseinheit 40 und eine Startsteuereinheit 30. Dem Spannungsvervielfacher 20 wird die Versorgungspannung Vdd 21 zugeführt. Der Spannungsvervielfacher 20 erzeugt aus dieser Versorgungsspannung 21 mittels mehrerer Pumpstufen eine höhere Spannung Vmult 22. Zur Steuerung des Spannungsvervielfachers 20 ist die Startsteuereinheit 30 vorgesehen. Die Startsteuereinheit 30 enthält einen Vergleicher 31 und eine Logikeinheit 35. Der Startsteuereinheit 30 wird ein Teilspannungswert Vdac 34 und eine Referenzspannung Vref 33 zugeführt. Diese Referenzspannung wird in einer Bandgapschaltung erzeugt.

Eine Bandgapschaltung ist eine Schaltung, mit der eine Spannung erzeugt werden kann, deren Wert von der Halbleiterphysik gegeben ist. Solche Schaltungen werden für die Erzeugung von Referenzspannungen benutzt. Die erzeugte Spannung ist vom verwendeten Halbleitermaterial (Si, Ge, GaAs, InPh, etc. ) bestimmt und variiert kaum in der Massenproduktion. Außerdem kann dadurch eine gezielte Temperaturabhängigkeit der erzeugten Spannung realisiert werden.

Der Vergleicher 31 nimmt einen Vergleich dieser zugeführten Spannungswerte 31 und 34 vor und erzeugt das Aktivierungssignal 32. Das Aktivierungssignal 32 wird dem Spannungsvervielfacher 20 und der Logikeinheit 35 zugeführt. Die Logikeinheit 35 erzeugt das Anfangsstartsignal 36. Mittels der Logikeinheit 35 wird beispielsweise der Multiplikationsfaktor M des Spannungsvervielfachers 20 festgelegt. Die Logikeinheit 35 ist ebenfalls in der Lage die Spannungsversorgung für den Spannungsvervielfacher 20 einbzw. auszuschalten.

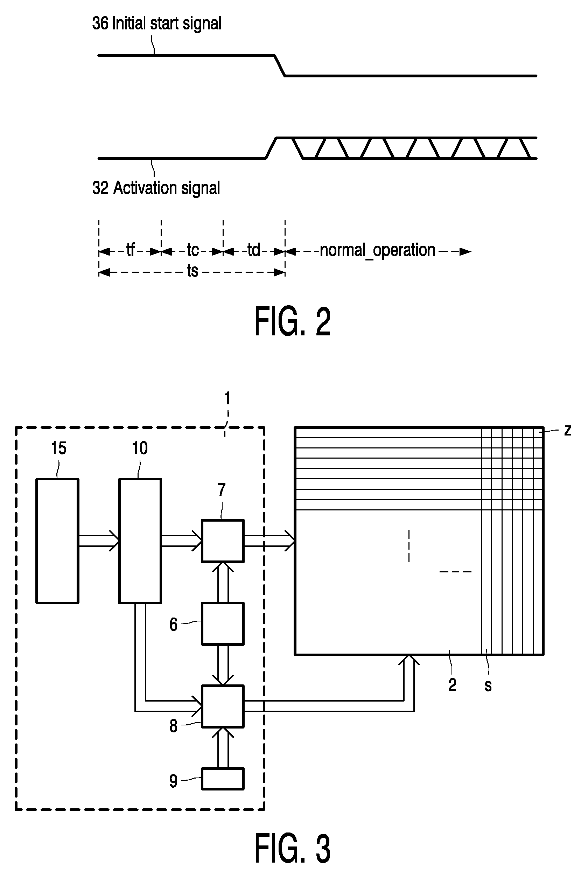

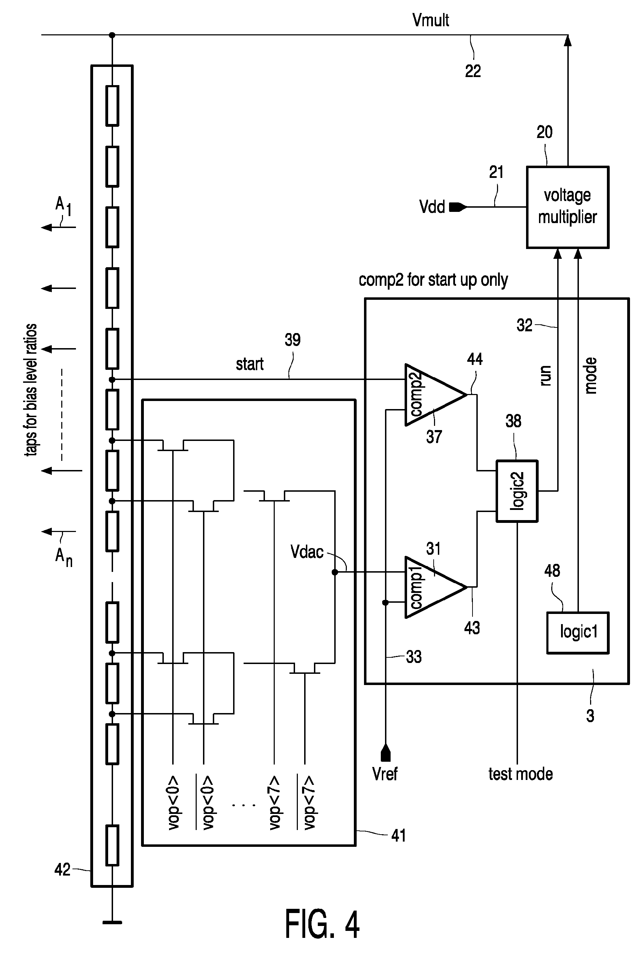

Von der durch den Spannungsvervielfacher 20 erzeugten Spannung Vmult 22 werden über eine Spannungsteilerkette 42, die beispielsweise als Widerstandskette realisiert ist, mehrere Teilspannungswerte Vteil erzeugt. Mittels der Schalteinrichtung 41, die beispielsweise als Transistorarray realisiert ist, wird eine der Teilspannungen Vteil zur Startsteuereinheit 30 als Signal 34 geleitet. Die unterschiedlichen Teilspannungswerte Vteil werden sowohl der Schalteinrichtung 41, als auch über die Anschlüsse A1-An einer in Fig.3 dargestellten Verstärkerschaltung 10 zur Ansteuerung der Zeilen Z eines Displays 2 zugeführt. Die Schaltsteuereinrichtung 41 ist durch ein in Fig.4 näher dargestelltes Transistorarray 41 realisiert und wird über Spannungen Vop gesteuert. Diese Spannungen Vop werden von der Spannung Vmult 22 abgeleitet. Vop kann folgende Spannungswerte haben: entweder Masse (Vss) oder Vmult. Vmult ist durch die Regelung bestimmt, kann aber maximal M*Vdd sein, wobei M der gewählte Multiplikationsfaktor des Spannungsvervielfachers ist. Das Aktivierungssignal 32 als Ergebnis des Vergleichers 31 wird von der Logikeinheit 35 überwacht. In dieser Logikeinheit 35 wird die selbsteinstellende Startsequenz zur Erzeugung des Anfangsstartsignals 36 erzeugt.

Mittels einer derartigen Anordnung 15 ist es möglich, einen schnellen und sicheren Start des Spannungsvervielfachers 20 zu ermöglichen. In der Startzeit ts wird der Spannungsvervielfacher 20 in einem Direktmode betrieben. Hierbei wird die Versorgungsspannung Vdd 21 direkt auf den Ausgang des Spannungsvervielfachers 20 durchgeschaltet, so dass die Ausgangsspannung 22 Vmult des Spannungsvervielfachers 20 der Versorgungsspannung Vdd 21 entspricht.

In Fig.2 ist ein Diagramm dargestellt, in dem der Verlauf des Anfangsstartsignals 36 dargestellt ist. Das Anfangsstartsignal 36 wird von der Logikeinheit 35 erzeugt. Während der Startzeit ts, die sich zusammensetzt aus einem Anteil einer festen Zeit tf, einer Überwachungszeit tc und einer Verzögerungszeit td, wird das Anfangsstartsignal 36 an den Spannungsvervielfacher geleitet. Nachdem die feste Zeit tf von etwa 1 ms verstrichen ist, wird das Aktivierungssignal 32 von der Logikeinheit kontrolliert oder überwacht. Wenn das Aktivierungssignal 32 in den logischen Zustand 1 wechselt oder während dieser Zeit tc in diesem Zustand bleibt und eine zusätzliche Verzögerungszeit td verstrichen ist, wird der Spannungsvervielfacher 20 vom Direktmode in den Normalbetrieb geschaltet. Der Spannungsvervielfacher 20 wird von diesem Moment an von dem Aktivierungssignal 32 gesteuert. Die Zeit tf und auch die Zeit td kann applikationsabhängig auch 0 sein. Dadurch kann die Zeit in der der Spannungsvervielfacher im Direktmode betrieben wird sehr klein gehalten werden.

Fig.3 zeigt eine Anordnung mit einem Treiberschaltkreis 1 und einem Display 2. Dabei enthält der Treiberschaltkreis 1 einen Speicher 9, in dem die Bilddaten gespeichert sind Desweiteren enthält der Treiberschaltkreis 1 eine Anordnung 15 zur Ansteuerung einer Anzeigeneinheit. Eine Schalt- und Verstärkervorrichtung 10 führt die von der Anordnung 15 erzeugten Teilspannungen einem Switch 7 zu. Ein Funktionsgenerator 6 erzeugt Sets von orthogonalen Funktionen. Diese Sets von orthogonalen Funktionen werden an den Switch 7 geführt. Dort werden die bereitgestellten Teilspannungen und die orthogonalen Funktionen verknüpft und an die jeweiligen Zeilen Z des Displays 2 herangeführt. Die erzeugten Teilspannungswerte und die Versorgungsspannungen Vmult, Vdd und Vss werden ebenso dem Switch 8 zugeführt. Dem Switch 8 werden auch die orthogonalen Funktionen des Funktionsgenerators 6 zur Verfügung gestellt. Im Switch 8 wird mittels des Sets der orthogonalen Funktionen und der aus dem Speicher 9 ausgelesenen Bilddaten eine Spaltenspannung berechnet. Diese Spaltenspannung wird dann aus der Menge der zur Verfügung stehenden Teilspannungen ausgewählt und an die Spalten S des Displays 2 angelegt.

Fig.4 zeigt eine Anordnung zur Ansteuerung beispielsweise einer Anzeigeeinrichtung mit einem zusätzlichen Startkomparator 37. Diese Anordnung enthält ebenso wie die Fig.1 eine Widerstandskette 42 zur Erzeugung von Teilspannungswerten, einen Spannungsvervielfacher 20, eine Startsteuereinheit 30, eine als Transistorarray ausgeführte Schalteinrichtung 41, einen Logikblock 48, einen Vergleicher 31 und einen weiteren Logikblock 38. Dem Startkomparator 37 wird ein Teilspannungswert 39 zugeführt. Dieser Startkomparator 37 erzeugt ein Ausgangssignal 44, welches dem Logikblock 38 zugeführt wird. Dem Logikblock 38 wird ebenso das Vergleichssignal 43 des Vergleichers 31 zugeführt. In diesem Logikblock 38 wird eine Oderverknüpfung vorgenommen, die wiederum ein Aktivierungssignal 32 zum Spannungsvervielfacher 20 leitet. Mittels dieser Anordnung, die zwei Vergleicher 31 und 37 enthält, wird es ermöglicht ein Startsignal zu erzeugen, welches ein sicheres Starten des Spannungsvervielfachers 20 ermöglicht. In dieser Anordnung ist ein zusätzlichen Vergleichers 37 oder Startkomparators und eine weitere logische Verknüpfung 38 notwendig. Dadurch, dass das Teilspannungssignal 39 in jedem Fall ein definiertes Verhältnis von Vmult ist, erzeugt die Startsteuereinheit 30 ein sicheres Aktivierungssignal 32. Die Steuersignale Vop werden von Vmult abgeleitet. Vop kann Spannungswerte zwischen Vss (Masse) und Vmult haben. Für niedrige Spannungswerte von Vmult (Startup) ist Vdac 34 nicht definiert. Erst wenn die Spannung Vmult hoch genug ist, wird Vdac definiert und der Vergleicher 31 kann mit dem Signal 43 die Kontrolle des Spannungsvervielfachers 20 übernehmen. Das Verhältnis von Signal 39 und Spannung 29 Vmult ist so gewählt, dass der Startkomparator 37 den Spannungsvervielfacher 20 mindestens solange aktiviert, bis Vmult hoch genug ist, um Vdac zu definieren. Die Funktion der Logikeinheit 48 in Fig. 4 eine andere als die der Logikeinheit 35 in Fig.1. In der Logikeinheit 48 wird beispielsweise der Multiplikationsfaktor M des Spannungsvervielfachers 20 festgelegt. Die Logikeinheit 48 ist ebenfalls in der Lage die Spannungsversorgung für den Spannungsvervielfacher 20 ein- bzw. auszuschalten.

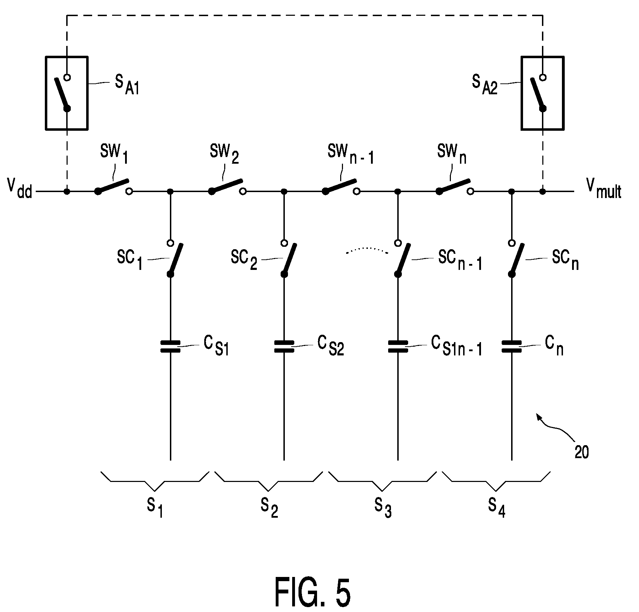

In Figur 5 ist eine Anordnung eines Spannungsvervielfachers mit Vorrichtungen für den Direktmode dargestellt. Der Spannungsvervielfacher 20 ist sehr vereinfacht dargestellt. Er enthält mehrere Stufen S1 bis Sn, die jeweils eine Schalteinrichtung SWn, eine Schalteinrichtung SCn und einen Kondensator CSn enthalten. Im Direktmode wird die Versorgungsspannung Vdd direkt zum Ausgang Vmult durchgeschaltet. Dazu werden die Schalteinrichtungen SWn geschlossen. Um die kapazitive Last niedrig zu halten, ist es vorteilhaft die Kondensatoren der Stufen von der direkten Durchschaltung Vdd nach Vmult abzuschalten. Dazu sind die Schalteinrichtungen SCn vorgesehen. Diese werden im Direktmode geöffnet. Im Normalmode sind diese Schalteinrichtungen SCn geschlossen oder leitend. Als Alternative zu dieser Ausgestaltung ist vorgesehen, eine direkte Verbindung zwischen dem Eingang Vdd des Spannungsvervielfachers und dem Ausgang Vmult zu schalten. Dazu ist wenigstens eine Schalteinrichtung SA1 vorgesehen, die gegebenenfalls durch eine weitere Schalteinrichtung SA2 ergänzt werden kann. Die zu wählende Ausführungsform ist applikationsabhängig, wobei die Platzverhältnisse auf dem Schaltkreis und der jeweilige zusätzliche Stromverbrauch beachtet werden müssen.

Eine erfindungsgemäße Anordnung 15 kann ebenso für die Spannungsversorgung von Flashmemories oder ähnlichen Anwendungen benutzt werden, die eine höhere Spannung benötigen, als diejenige, die durch die Systemversorgungsspannung zur Verfügung gestellt wird.

## Patentansprüche

1. Schaltungsanordnung (15) zur Erzeugung wenigstens eines Spannungswertes (Vmult) mit einer Teilspannungserzeugereinheit (40) und einem Spannungsvervielfacher (20), bei der zur Steuerung des Spannungsvervielfachers in einer Startzeit (ts) vorgesehen ist, den Spannungsvervielfacher in einen Direktmode zu schalten.

2. Schaltungsanordnung nach Anspruch 1,
**dadurch gekennzeichnet,**
**dass** vorgesehen ist, dem Spannungsvervielfacher ein Aktivierungssignal (32) zuzuführen, das aus einer von der Teilspannungserzeugungseinheit erzeugten Teilspannung (Vdac) und einem Referenzsignal (Vref) gebildet ist und dass vorgesehen ist, dem Spannungsvervielfacher während der Startzeit (ts) ein aus dem Aktivierungssignal (32) gebildetes Anfangsstartsignal (36) zuzuführen.

3. Schaltungsanordnung nach Anspruch 1,
**dadurch gekennzeichnet,**
**dass** eine Startsteuereinheit zur Steuerung des Spannungsvervielfachers vorgesehen ist, die zumindest einen Vergleicher (31) und eine Logikeinheit (35) enthält, wobei der Vergleicher zum Vergleich einer von der Teilspannungserzeugungseinheit erzeugten Teilspannung (Vdac) und einer Referenzspannung (Vref) und zur Erzeugung des Aktivierungssignals (32)vorgesehen ist, und eine Logikeinheit 35 ein Anfangsstartsignal (36) erzeugt, um den Spannungsvervielfacher in einen Direktmode zu schalten.

4. Schaltungsanordnung nach Anspruch 1,
**dadurch gekennzeichnet,**
**dass** die Startzeit (ts), in der der Spannungsvervielfacher (20) in einem Direktmode betrieben wird, adaptiv einstellbar ist.

5. Schaltungsanordnung nach Anspruch 1,
**dadurch gekennzeichnet,**
**dass** eine Serienschaltung von Schalteinrichtungen (SWn) der Stufen (Sn) im Spannungsvervielfacher (20) im Direktmode geschlossen sind und die den Stufen zugeordneten Kapazitäten (CSn) abschaltbar sind.

6. Schaltungsanordnung zur Ansteuerung einer Anzeigevorrichtung mit einer Teilspannungserzeugereinheit (40) und einem Spannungsvervielfacher (20), bei der zur Steuerung des Spannungsvervielfachers (20) vorgesehen ist, den Spannungsvervielfacher mittels eines Anfangsstartsignals (36) in einer Startzeit (ts) in einen Direktmode zu schalten.

7. Spannungsvervielfacher zur Erzeugung wenigstens eines Spannungswertes (Vmult) mit einer Serienschaltung von Stufen (Sn) mit Schalteinrichtungen (SWn), Schalteinrichtungen (SCn) und Kapazitäten (CSn),
**dadurch gekennzeichnet dass**,
während einer Startzeit (ts) die Schalteinrichtungen (SWn) geschlossen sind und dadurch am Eingang des Spannungsvervielfachers anliegende Versorgungsspannung (Vdd) auf den Ausgang des Spannungsvervielfachers durchgeschaltet ist.

8. Anzeigeeinheit (2) zur Darstellung von Bilddaten mit einer Anordnung (15) zur Ansteuerung der Anzeigeeinheit mit einer Teilspannungserzeugereinheit (40) und einem Spannungsvervielfacher (20), bei der vorgesehen ist, den Spannungsvervielfacher in einer Startzeit (ts) mittels wenigstens einem Signal (36) in einen Direktmode zu schalten.

9. Elektronisches Gerät mit einer Anzeigeeinheit (2) zur Darstellung von Bilddaten und mit einer Anordnung (15) zur Ansteuerung der Anzeigeeinheit mit einer Teilspannungserzeugereinheit (40) und einem Spannungsvervielfacher (20), bei der wenigstens ein Signal (36) zur Steuerung des Spannungsvervielfachers vorgesehen ist und der Spannungsvervielfacher in einer Startzeit (ts) in einen Direktmode schaltbar ist.

10. Verfahren zum Starten einer Schaltungsanordnung (15) mit einer Teilspannungserzeugereinheit (40), einem Spannungsvervielfacher (20), bei dem mittels eines Vergleichs eines Teilspannungswertes (Vteil) und einer Referenzspannung (Vref) ein Aktivierungssignal (32) erzeugt wird und bei dem der Spannungsvervielfacher (20) während einer Startzeit (ts) in einen Direktmode geschaltet wird und die Startzeit (ts) durch Überwachen eines Aktivierungssignals (32) adaptiv eingestellt wird.
